# EUROPEAN PATENT APPLICATION

(11) **EP 1 080 828 A2**
(43) Date of publication of application: **07.03.2001**
(21) Application number: 00117318.6
(22) Date of filing: 18.08.2000
(51) Int. Cl.: B23Q 1/52, B23Q 7/14, B23Q 1/01

(54) **Pallet-swing apparatus and machine tool having the pallet-swing apparatus**

(30) Priority: 20.08.1999 JP 23430699
(71) Applicant: Mori Seiki Co., Ltd., Yamatokoriyama-shi, Nara 639-1160 (JP)
(72) Inventor: Ota, Hidehito, Yamatokoriyama-shi, Nara, 639-1160 (JP)
(74) Representative: Reinhard - Skuhra - Weise & Partner

(57) **Abstract**

A pallet-swing apparatus is provided which has a construction to ensure quick pallet change. The pallet-swing apparatus is adapted to swing a pallet (8) about an axis (O1) extending parallel to an upper face of the pallet (8), the pallet (8) being adapted to fixedly hold a workpiece to be machined with a machine tool on the upper surface thereof. The pallet-swing apparatus comprises: arcuate guide members (14,14) disposed in a plane perpendicular to the axis (O1) with its arc center coinciding with the axis (O1); a pair of frames (11,11) supporting the guide members (14,14); a movable supporter (12,13,15) engaged with the guide members (14,14) movably along the guide members (14,14) for supporting the pallet (8); and drive means (16) for driving the movable supporter (12,13,15) to move the movable supporter (12,13,15) along the guide members(14,14).

## Description

### BACKGROUND OF THE INVENTION

### Field of the Invention

The present invention relates to a pallet-swing apparatus for swinging a pallet fixedly holding a workpiece on an upper face thereof about an axis extending parallel to the upper face of the pallet.

### Description of the Prior Art

In the field of machining with a machine tool, it is a recent practice to perform various machining operations on any work surfaces of a workpiece once chucked on a single machine tool to reduce the number of times of handling the workpiece for reduction of the entire machining time. With the machine tool, it is also possible to form not only simple configurations such as flat surfaces and inclined surfaces but also free curved surfaces on the workpiece. A pallet-swing apparatus of the aforesaid type is one means which allows for such machining.

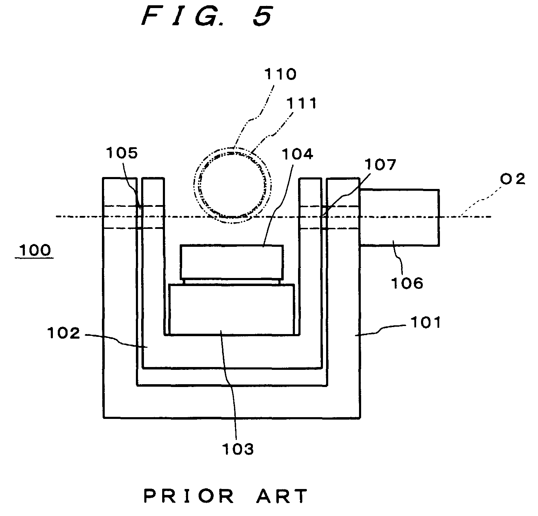

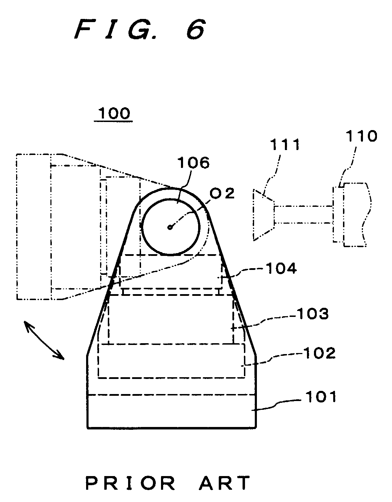

One example of such a pallet-swing apparatus of the prior art is shown in Figs. 5 and 6, which are a front view and a right side view thereof, respectively. As shown in Figs. 5 and 6, the prior-art pallet-swing apparatus 100 includes a stationary frame 101 fixed to a stationary structure such as a bed of a machine tool, a movable frame 102 supported by the stationary frame 101 via a drive shaft 107 and a support shaft 105, a support base 103 supported by the movable frame 102, and a drive motor 106 for turning the drive shaft 107 about an axis thereof.

The stationary frame 101 and the movable frame 102 each have a generally U-shape as viewed from the front side thereof. The movable frame 102 is accommodated in a U-shaped inner space of the stationary frame 101, and is rotatable about the common axis O2 of the drive shaft 107 and the support shaft 105 with upper portions thereof being respectively supported by the drive shaft 107 and the support shaft 105. The drive shaft 107 has one end connected to the drive motor 106 and the other end connected to the movable frame 102 with an intermediate portion thereof being supported by the stationary frame 101 via a bearing (not shown). The support shaft 105 has one end fixed to the stationary frame 101 and the other end connected to the movable frame 102 via a bearing (not shown).

The support base 103 is fixedly placed on a bottom face of the U-shaped movable frame 102, and incorporates a holder mechanism (not shown) for detachably holding a pallet 104. The support base 103 is adapted to fixedly hold thereon the pallet 104 which has been transported thereto by a pallet changer or the like. In general, the support base 103 also incorporates a rotation mechanism, so that the pallet 104 thus held thereon can be rotated about a vertical axis thereof. Employed as the drive motor 106 is a servo motor which has a position detector and is adapted to be feedback-controlled.

In the pallet-swing apparatus 100, when the drive motor 106 is driven to turn the drive shaft 107 about the axis O2 thereof, the movable frame 102 coupled to the drive shaft 107 is swung together with the support base 103 and the pallet 104 in arrow directions shown in Fig. 6. By properly controlling the operation of the drive motor 106, the pallet 104 and the like can be swung to any angular position. While the pallet 104 is swung by the operation of the pallet-swing apparatus 100 and rotated about the vertical axis thereof, a workpiece fixedly placed on the pallet 104 is machined with the use of a tool 111 disposed in position as shown in Figs. 5 and 6. Thus, any work surfaces of the workpiece can be subjected to the machining operations, and a free curved surface can be formed on the workpiece. It is noted that a reference numeral 110 in Fig. 6 denotes a spindle for holding and turning the tool 111.

Where the pallet 104 held on the support base 103 in the pallet-swing apparatus 100 having the aforesaid construction is to be changed by an automatic pallet changer, however, the pallet-swing apparatus 100 is accessible only from a side thereof opposed to the spindle 110. Therefore, quick pallet change is impossible.

More specifically, a so-called through-feeding method is preferably employed for the quickest pallet change, wherein workpieces are transported in the same direction for loading and unloading thereof and the workpiece loading and unloading operations are concurrently performed in parallel. However, the aforesaid pallet-swing apparatus 100 is accessible only from the side thereof opposed to the spindle 110 for the pallet change as described above, so that the loading of a new pallet 104 can be effected only after the pallet 104 currently placed on the support base 103 is unloaded. Therefore, the unloading and loading operations should separately be performed, thereby failing to achieve the quick pallet change. The limited accessibility to the pallet-swing apparatus 100 for the pallet change (i.e., the accessibility to the apparatus 100 only from the side thereof opposed to the spindle 110 for the pallet change) is mainly attributed to the structure of the pallet-swing apparatus adapted to support the pallet 104 on the movable frame 102 which is supported by the support shaft 105 and the drive shaft 107 above the upper face of the pallet 104.

In the field of machining, various attempts have constantly been made for the reduction of the machining time, and there is a demand for further reduction of the time required for the pallet change.

In view of the foregoing, it is an object of the present invention to provide a pallet-swing apparatus having a novel structure for swinging a pallet and allows for quick pallet change.

### SUMMARY OF THE INVENTION

In accordance with the present invention to achieve the aforesaid object, there is provided a pallet-swing apparatus for swinging a pallet about an axis extending parallel to an upper face of the pallet, the pallet being adapted to fixedly hold a workpiece to be machined with a machine tool on the upper surface thereof, the pallet-swing apparatus comprising: an arcuate guide disposed in a plane perpendicular to the axis with its arc center coinciding with the axis; a supporter supporting the guide; a movable supporter engaged with the guide movably along the guide for supporting the pallet; and drive means for driving the movable supporter to move the movable supporter along the guide.

When the movable supporter is driven by the drive means, the movable supporter is moved along the arcuate guide thereby to be swung about the axis. As a result, the pallet supported on the movable supporter is swung about the axis, so that machining operations can be performed on a greater number of work surfaces of the workpiece fixed on the pallet.

The supporter is configured to provide a free space to which the pallet faces, and the movable supporter has a holder mechanism for detachably holding the pallet. The pallet-swing apparatus further comprises a pallet loading mechanism for transporting the pallet onto the movable supporter in a transport direction along the axis and causing the holder mechanism to hold the pallet transported thereon, and a pallet unloading mechanism for causing the holder mechanism to release the pallet and transporting the pallet out of the in the same transport direction.

Since the supporter is configured to provide the space to which the pallet faces, the pallet can be loaded and unloaded through the space. Thus, pallets can be transported onto and out of the movable supporter in the same direction for the pallet loading and unloading. By making the pallet loading and unloading directions consistent with each other, a so-called through-feed method can be employed for the pallet change, wherein the pallet loading and unloading operations are concurrently performed in parallel. Therefore, the time required for the pallet change can be reduced.

The supporter includes a pair of frames which are disposed in an opposed relation, and the guide includes a pair of guide members which are respectively opposed to opposed surfaces of the pair of frames. The movable supporter is disposed between the pair of frames in engagement with the respective guide members. With this arrangement, the movable supporter is supported by the pair of frames in engagement with the pair of guide members. That is, the movable supporter can stably be supported on its opposite sides thereby to be stably swung.

The drive means may include an arcuate rack having a greater radius than the guide and having a toothed outer periphery, a pinion gear rotatably supported by the supporter in meshing engagement with the arcuate rack, and a drive motor for supplying a power to the pinion gear. The arcuate rack may be fixed to the movable supporter concentrically with the guide. Further, an arresting mechanism may be provided for arresting the movable supporter at a position along the guide. With this arrangement, the movable supporter swung to a given position can firmly be arrested to that position during a machining operation, so that a machining load is prevented from being transmitted to the drive motor.

A machine tool provided with the pallet-swing apparatus can perform machining operations on any work surfaces of a workpiece, and form a free curved surface thereon. In addition, the machine tool can quickly achieve the pallet change. Thus, the entire machining time including the time required for the pallet change can be reduced.

### BRIEF DESCRIPTION OF THE DRAWINGS

Fig. 1 is a side view illustrating a machine tool, in its entirety, according to one embodiment of the present invention;
Fig. 2 is a front view illustrating a pallet-swing apparatus according to the embodiment as seen in the direction of an arrow II in Fig. 1;
Fig. 3 is a side sectional view as seen in the direction of arrows III-III in Fig. 2;
Fig. 4 is a side sectional view illustrating an operative state of the pallet-swing apparatus according to the embodiment;
Fig. 5 is a front view illustrating a prior-art pallet-swing apparatus; and
Fig. 6 is a side view illustrating the prior-art pallet-swing apparatus.

### DETAILED DESCRIPTION OF THE INVENTION

One specific embodiment of the present invention will hereinafter be described with reference to the attached drawings.

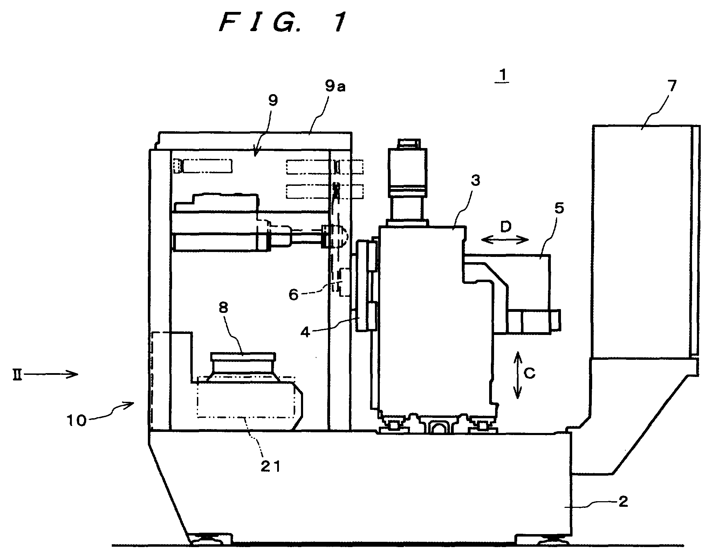

As shown in Fig. 1, a machine tool 1 according to the embodiment is a so-called horizontal machining center. The machine tool 1 essentially includes a bed 2, a column 3 disposed on the bed 2 and movable perpendicularly to the face of the drawing, a saddle 4 supported by the column 3 in a vertically movable manner (movably in the directions of arrows C), a quill 5 supported by the saddle 4 movably in back-and-forth directions (in the directions of arrows D), a spindle 6 supported rotatably by the quill 5, a pallet-swing apparatus 10 disposed on the bed 2 as opposed to the column 3, and the like. In Fig. 1, there are also shown a tool changer 9 for changing a tool attached to the spindle 6, a frame 9a supporting the tool changer 9 and a controller 7 for controlling respective working members of the machine tool 1.

A detailed explanation will hereinafter be given to the machine tool according the embodiment. Since the bed 2, the column 3, the saddle 4, the quill 5 and the spindle 6 described above are well-known and fundamental components of the machine tool, no detailed explanation will be given thereto, and only the pallet-swing apparatus 10 will be described in detail.

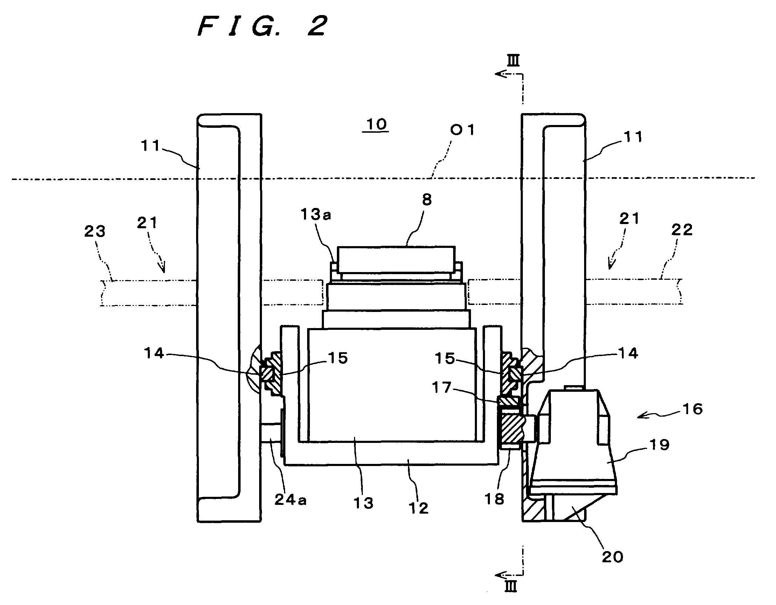

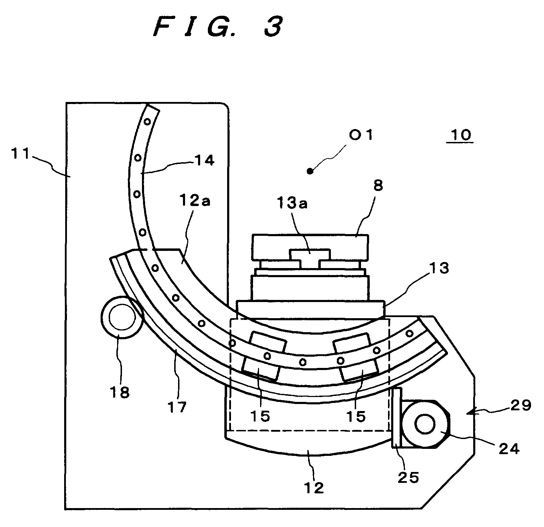

As shown in Figs. 2 and 3, the pallet-swing apparatus 10 includes a pair of stationary frames 11, 11 disposed upright in a properly spaced relation on the bed 2, guide rails 14, 14 respectively provided on interior surfaces of the pair of stationary frames 11, 11, a plurality of slide members 15 movable along the guide rails 14, 14 in engagement therewith, a movable frame 12 disposed between the pair of stationary frames 11, 11 and having the slide members 15 fixed on opposite outer surfaces thereof, a pallet holding mechanism 13 supported on the movable frame 12 for holding a pallet 8, a drive mechanism 16 for moving the movable frame 12 along the guide rails 14, 14, an arresting mechanism 29 for arresting the movable frame 12 moved to a position by the drive mechanism 16, and a pallet loading/unloading mechanism 21 for transporting the pallet 8 currently placed on the pallet holding mechanism 13 to the outside of the machine tool while transporting a new pallet 8 onto the pallet holding mechanism 13 from the outside of the machine tool.

The pair of stationary frames 11, 11 each have a generally L-shape as seen in elevation in Fig. 3. The pair of guide rails 14, 14, which each have an arcuate shape, are respectively fixed onto the interior surfaces of the stationary frames 11, 11 in an opposed relation, i.e., in a symmetric relation with respect to a plane. The movable frame 12 has a U-shaped vertical section, and has fan-shaped fixtures 12a respectively provided on upper edges of vertical portions thereof. The slide members 15 are fixed to the fixtures 12a as described above. The radial centers O1 of the fan-shaped fixtures 12a coincide with the radial centers of the guide rails 14, 14.

The drive mechanism 16 includes an arcuate rack 17 fixed to an outer side face of one of the fixtures 12a (on the right-hand side in Fig. 2) of the movable frame 12 and having a toothed outer periphery, a pinion gear 18 supported rotatably via a bearing by the stationary frame 11 in meshing engagement with the arcuate rack 17, a decelerator 19 coupled to the pinion gear 18, and a drive motor (not shown) for inputting a power to the decelerator 19. A servo motor having a position detector is employed as the drive motor (not shown). A feedback-controlled power of the servo motor is decelerated by the decelerator 19 and transmitted to the pinion gear 18, so that the movable frame 12 is driven via the arcuate rack 17 thereby to be moved along the guide rails 14, 14. The decelerator 19 is supported by a bracket 20 fixed to the stationary frame 11. Though not shown, the drive motor (not shown) is also supported by a bracket fixed to the stationary frame 11.

The pallet holding mechanism 13 is fixed onto an upper face of the bottom of the U-shaped movable frame 12, and includes a clamp member 13a having a T-shaped cross section and a driver (not shown) incorporated therein for vertically driving the clamp member 13a. When the pallet 8 is loaded on the pallet holding mechanism 13, the clamp member 13a is fitted in an engagement groove formed as having a complementary shape on a bottom portion thereof, and then the pallet is moved downward. Thus, the pallet holding mechanism clamps the pallet 8 on an upper face thereof. Further, the pallet holding mechanism 13 incorporates an indexing mechanism for rotating the clamped pallet 8 to any angular position about its perpendicular axis (which extends perpendicularly to an upper face of the pallet).

The pallet loading/unloading mechanism 21 includes loading transport means 22 provided on a pallet loading side thereof, unloading transport means 23 provided on a line extending from the loading transport means 22 on a pallet unloading side thereof, and feed means (not shown) for transferring the pallet 8 transported by the loading transport mean 22 onto the pallet holding mechanism 13 and transferring the pallet 8 from the pallet holding mechanism 13 to the unloading transport means 23. The loading transport means 22 and the unloading transport means 23 are each comprised of a conveyor or the like. The feed means (not shown) is constituted by an actuator such as a hydraulic cylinder and a drive rod which is driven by the actuator. The loading transport means 22 and the unloading transport means 23 are respectively disposed adjacent the pallet holding mechanism 13 on the loading and unloading sides with one-end portions thereof respectively extending across horizontal edges of the stationary frames 11, 11.

The arresting mechanism 29 includes a bracket 25 fixed on a side face of the movable frame 12 and a hydraulic cylinder 24 supported by the bracket 25, and is adapted to advance a piston rod 24a from the hydraulic cylinder 24 to bring a distal end of the piston rod into abutment against the interior face of the stationary frame 11.

Next, an explanation will be given to a pallet loading/unloading operation and a pallet swing operation to be performed in the machine tool 1 having the aforesaid construction in accordance with the embodiment. It is herein assumed that no pallet 8 is initially held on the pallet holding mechanism 13 and the pallet holding mechanism 13 is in a state as shown in Fig. 3. First, the pallet loading/unloading operation will be described.

The pallet 8 is transported to the loading side of the pallet holding mechanism 13 by the loading transport means 22 and transferred onto the pallet holding mechanism 13 by the feed means (not shown). Thus, the pallet 8 is placed on the pallet holding mechanism 13 with the clamp member 13a fitted in the engagement groove of the pallet 8. Then, the clamp member 13a is driven to be moved downward, whereby the pallet 8 is fixed onto the pallet holding mechanism 13 by the clamp member 13a. Thus, a workpiece fixedly placed on the pallet 8 is ready for machining.

Upon completion of necessary machining operations performed on the workpiece, the clamp member 13a is driven to be moved upward, so that the pallet 8 is released from the clamp member 13a. Subsequently, the feed means is driven again to transfer the pallet 8 from the pallet holding mechanism 13 to the unloading transport means 23. Concurrently therewith, a new pallet 8 transported by the loading transport means 22 is transferred onto the pallet holding mechanism 13. The new pallet 8 transported onto the pallet holding mechanism 13 is fixed onto the pallet holding mechanism 13 in the aforesaid manner.

By performing the aforesaid operation, the pallet 8 on the pallet holding mechanism 13 is replaced with a new one, and the unloaded pallet 8 is transported to another machine tool for the next machining operation.

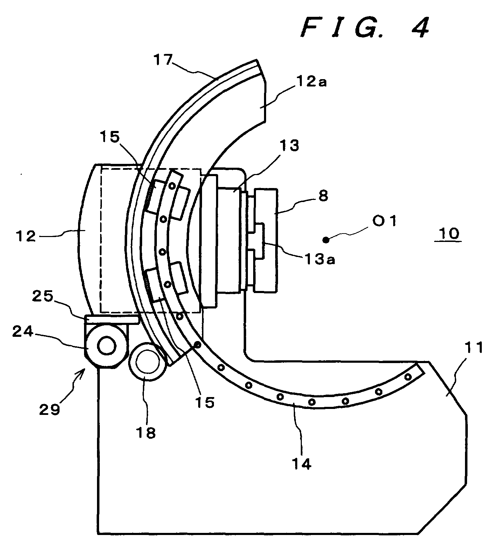

The pallet swinging operation will next be explained. First, the drive motor (not shown) is driven, and its power is transmitted to the pinion gear 18 via the decelerator 19. Thus, the arcuate rack 17 meshed with the pinion gear 18 is driven, whereby the movable frame 12 coupled to the arcuate rack 17 starts moving. The movable frame 12 moves along the guide rails 14, 14, i.e., along an arcuate path, with the guide rails 14, 14 being engaged with the slide members 15, 15 fixed on the opposite side faces of the movable frame 12, whereby the pallet holding mechanism 13 fixed to the movable frame 12 is moved or swung together with the pallet 8. Thus, the arcuate rack 17, the movable frame 12 and the pallet holding mechanism 13 are swung by 90 degrees from the position shown in Fig. 3. This state is shown in Fig. 4.

As described above, the drive motor (not shown) is feedback-controlled, so that the angular position of the movable frame 12 and the like thus swung can be set to any position. Therefore, any work surfaces of the workpiece can be subjected to the machining operations by rotating the pallet 8 about its vertical axis and swinging the pallet 8.

Where the pallet 8 swung to a position is to be arrested at that position, the hydraulic cylinder 24 of the arresting mechanism 29 is driven to advance the piston rod 24a thereof to bring the distal end of the piston rod into abutment against the stationary frame 11. Thus, the movable frame 12 is firmly arrested with respect to the stationary frame 11, so that a machining load is prevented from being transmitted to the drive motor.

Since the machine tool 1 according to the embodiment is constructed such that the pallet holding mechanism 13 and the pallet 8 are swung along the arcuate guide rails 14, 14, the stationary frames 11, 11 can be configured in an L-shape as seen in elevation, i.e., to provide a free space to which the pallet 8 faces. As a result, the loading transport means 22 and the unloading transport means 23 can respectively be provided adjacent the pallet holding mechanism 13 on the loading and unloading sides with the one-end portions thereof extending across the horizontal edges of the stationary frames 11, 11. Thus, the pallet change can be carried out by the so-called through-feed method in which the pallets are transported in the same direction for the pallet loading and unloading, and the pallet loading and unloading operations are concurrently performed in parallel. Therefore, the time required for the pallet change can drastically be reduced.

Further, the movable frame 12 and the pallet holding mechanism 13 are supported by the pair of stationary frames 11, 11 in engagement with the guide rails 14, 14. That is, the movable frame 12 and the pallet holding mechanism 13 can stably be supported on the opposite sides thereof so as to be stably swung.

While the present invention has thus been described by way of the one embodiment thereof, the embodiment is not intended to limit any other conceivable embodiments of the invention. For example, the movable frame 12 is adapted to be guided by the guide rails 14 and the slide members 15 in the embodiment described above, but may be guided by a slidable guide surface structure instead of the guide rails and the slide members. Further, an actuator such as a hydraulic cylinder may be employed as the drive mechanism 16.

## Claims

1. A pallet-swing apparatus (10) for swinging a pallet (8) about an axis (O1) extending parallel to an upper face of the pallet (8), the pallet (8) being adapted to fixedly hold a workpiece to be machined with a machine tool (1) on the upper surface thereof, the pallet-swing apparatus comprising:
an arcuate guide (14) disposed in a plane perpendicular to the axis (O1) with its arc center coinciding with the axis (O1);
a supporter (11) supporting the guide (14);
a movable supporter (12,13,15) engaged with the guide (14) movably along the guide (14) for supporting the pallet (8); and
drive means (16) for driving the movable supporter (12,13,15) to move the movable supporter (12,13,15) along the guide (14).

2. A pallet-swing apparatus as set forth in claim 1,
wherein the supporter (11) is configured to provide a free space to which the pallet (8) faces,
wherein the movable supporter (12,13,15) has a holder mechanism (13a) for detachably holding the pallet (8),
the pallet-swing apparatus further comprising:
a pallet loading mechanism (22) for transporting the pallet (8) onto the movable supporter (12,13,15) in a transport direction along the axis (O1) and causing the holder mechanism (13a) to hold the pallet (8) transported thereon; and
a pallet unloading mechanism (23) for causing the holder mechanism (13a) to release the pallet (8) and transporting the pallet (8) out of the movable supporter (12,13,15) in the same transport direction.

3. A pallet-swing apparatus as set forth in claim 1 or 2,
wherein the supporter (11) includes a pair of frames (11,11) which are disposed in an opposed relation,
wherein the guide (14) includes a pair of guide members (14,14) which are respectively opposed to opposed surfaces of the pair of frames (11,11),
wherein the movable supporter (12,13,15) is disposed between the pair of frames (11,11) in engagement with the respective guide members (14,14).

4. A pallet-swing apparatus as set forth in any of claims 1 to 3, wherein the drive means (16) comprises an arcuate rack (17) having a greater radius than the guide (14) and having a toothed outer periphery, a pinion gear (18) rotatably supported by the supporter (11) in meshing engagement with the arcuate rack (17), and a drive motor for supplying a power to the pinion gear (18), the arcuate rack (17) being fixed to the movable supporter (12,13,15) concentrically with the guide (14).

5. A pallet-swing apparatus as set forth in any of claims 1 to 4, further comprising an arresting mechanism (29) for arresting the movable supporter (12,13,15) at a position along the guide (14).

6. A machine tool comprising a pallet-swing apparatus as recited in any of claims 1 to 5.
